# EUROPEAN PATENT APPLICATION

(11) **EP 4 651 297 A1**
(43) Date of publication of application: **19.11.2025**
(21) Application number: 24220962.5
(22) Date of filing: 18.12.2024
(51) Int. Cl.: H01M 50/583

(54) **BUS BAR, BATTERY MODULE AND BATTERY PACK**

(30) Priority: 14.05.2024 CN 202410599409; 14.05.2024 CN 202421050155 U; 27.08.2024 WO PCT/CN2024/114807
(71) Applicant: Eve Energy Co., Ltd., Huizhou, Guangdong 516006 (CN)
(72) Inventor: Ren, Chaoju, Huizhou, Guangdong 516000 (CN); Huang, Yi, Huizhou, Guangdong 516000 (CN); Zhang, Guojiang, Huizhou, Guangdong 516000 (CN)
(74) Representative: Michalski Hüttermann & Partner Patentanwälte mbB

(57) **Abstract**

Disclosed are a bus bar, a battery module, and a battery pack. The bus bar includes at least two conductive sheets (2). By setting the first weak part (230) and the second weak part (240) above the thinning area (131), when pressure is released, the thinning area (131) is first broken by the high-pressure gas in the cells (1), and the impact force breaks the first weak part (230) and the second weak part (240), thereby enabling the pressure relief valve (13) to relieve pressure efficiently and smoothly. Moreover, while the first weak part (230) and the second weak part (240) are broken, the circuit connection between two adjacent cells (1) is also disconnected, thereby achieving short-circuit protection, and finally achieving a double protection of pressure relief protection and cell short-circuit protection synchronously.

## Description

### TECHNICAL FIELD

The present disclosure relates to the technical field of batteries and, particularly, to a bus bar, a battery module, and a battery pack.

### BACKGROUND

In the field of cylindrical batteries, in order to improve the output voltage or current of the battery, one or more cells are usually connected in series and/or in parallel to form a battery module using a bus bar. For this purpose, the bus bar can transmit the power generated by all cells to the output port of the battery module for use by external devices, and the bus bar can also balance the power difference between the cells to improve the service life and performance of the entire battery module.

In the cylindrical battery module, the pressure relief valve of the cell is designed on the same side as its positive and negative electrodes, and the bus bar connects the positive and negative electrodes of the plurality of cells in series and in parallel through welding.

### SUMMARY

There is a technical defect in the above structural design: the bus bar affects the pressure relief efficiency of the pressure relief valve when pressure needs to be relieved through the pressure relief valve, resulting in a slower pressure relief efficiency of the pressure relief valve. When a large amount of heat is released inside the cells, the heat in the cells under this structure cannot be quickly discharged, which is prone to a continuous thermal runaway reaction caused by a rapid increase in the heat of the surrounding cells, which damages the entire battery module. In addition, the bus bar design under this structure cannot provide timely and effective short-circuit protection when the cells are short-circuited.

In a first aspect, provided in the present disclosure is a bus bar, configured to connect a plurality of cells in series and/or in parallel, including at least two conductive sheets, and each conductive sheet includes a positive electrode welding part and a negative electrode welding part.

A first weak part is provided at a j oint of the positive electrode welding parts of two adjacent conductive sheets, and a second weak part is provided at a joint of the positive electrode welding part and the negative electrode welding part of each of the conductive sheets.

Among each of the conductive sheets, the positive electrode welding part is connected to the positive electrode of the cell, and negative electrode welding part is connected to the negative electrode of an adjacent cell.

Among each of the cells, a pressure relief valve is provided at the positive electrode thereof, the positive electrode and the pressure relief valve are of a one-piece structure, the pressure relief valve is provided with a thinning area configured to be burst when pressure is released, the first weak part and the second weak part are respectively located above the thinning area, so that at least one of the following is met: (a) the first weak part and the second weak part are broken by a strong impact force when the thinning area is burst, and (b) the first weak part and the second weak part are fused by overcurrent when subjected to a strong current.

In a second aspect, provided in the present disclosure is a battery module, including a plurality of cells and the bus bar, and the bus bar is connected with the conductive sheet in series and/or in parallel.

In a third aspect, provided in the present disclosure is a battery pack, including the battery module.
(1) By setting the first weak part and the second weak part of the bus bar above the thinning area, the thinning area is first opened by the high-pressure gas in the cell when pressure is relieved by the pressure relief valve. At the same time, the strong impact force of the rapid opening of the pressure relief valve breaks the first weak part and the second weak part, thereby enabling the pressure relief valve to release pressure efficiently without being hindered by the bus bar. As the first weak part and the second weak part are broken, the circuit connection loop between the two adjacent cells is also disconnected, so that even if a short circuit occurs between the cells, the short circuit protection can be carried out in time, and finally a double protection of internal pressure relief protection and cell short-circuit protection is achieved synchronously when the cells are abnormal, which provides an enhanced guarantee for the thermal safety and electrical safety operation of the battery. In addition, the first weak part and the second weak part may also be fused by overcurrent when subjected to strong current, which can also achieve the purpose of double protection, i.e., achieve internal pressure relief protection and cell short-circuit protection between cells when the cells are abnormal.
(2) The battery module provided in the present disclosure is provided with the above mentioned bus bar. By setting the first weak part and the second weak part of the bus bar directly facing the thinning area, the pressure relief valve can efficiently relieve pressure, and can also disconnect the circuit connection loop between two adjacent cells, so that even if a short-circuit occurs between cells or in the battery module, the short-circuit protection can be carried out in time, and finally a double protection of the internal pressure relief protection of the battery module and the cell short-circuit protection of the battery module can be achieved synchronously to improve the thermal safety and electrical safety operation performance of the battery module. In addition, the first weak part and the second weak part may also be fused by overcurrent when subjected to strong current, which can also achieve the double protection of pressure relief protection and short-circuit protection.
(3) The battery pack provided in the present disclosure is provided with the above battery module, which can ensure that the pressure relief valve can effectively relieve pressure, and can also disconnect the circuit connection loop between two adjacent cells, so that even if a short-circuit occurs between the cells or in the battery module or the battery pack, the short-circuit protection can be carried out in time, and finally a double protection of the internal pressure relief protection of the battery pack and the short-circuit protection of the battery pack can be achieved synchronously to improve the thermal safety and electrical safety operation performance of the battery pack. In addition, the first weak part and the second weak part may also be fused by overcurrent, which can also achieve the double protection of pressure relief protection and short-circuit protection.

### BRIEF DESCRIPTION OF THE DRAWINGS

Fig. 1 is a schematic structural diagram of the bus bar of the present disclosure in a front view;
Fig. 2 is a schematic structural diagram of the bus bar of the present disclosure in a perspective view;
Fig. 3 is a schematic structural diagram at A of Fig. 2 in a partial enlarged view;
Fig. 4 is a schematic structural diagram of the bus bar of the present disclosure when the first weak parts and the second weak parts are both disconnected in a front view;
Fig. 5 is a schematic structural diagram of the bus bar of the present disclosure when the first weak parts and the second weak parts are both disconnected in a perspective view;
Fig. 6 is a schematic structural diagram of the cell of the present disclosure;
Fig. 7 is a schematic structural diagram of the bus bar of the present disclosure connecting a plurality of cells in series and in parallel in a front view;
Fig. 8 is a schematic structural diagram of the bus bar of the present disclosure connecting a plurality of cells in series and in parallel in a perspective view;
Fig. 9 is a schematic structural diagram of the battery module of the present disclosure when the first weak parts and the second weak parts are partially disconnected in a front view;
Fig. 10 is a schematic structural diagram of the battery module of the present disclosure when the first weak parts and the second weak parts are partially disconnected in a perspective view;

The meanings of the reference numerals are as follows:
1 cell, 11 positive electrode, 12 negative electrode, 13 pressure relief valve, 131 thinning area;
2 conductive sheet, 21 positive electrode welding part, 210 positioning through hole, 22 negative electrode welding part, 220 arc-shaped surface;
23 first connecting strip, 230 first weak part, 2301 first notch, 2302 first fragile part;
24 second connecting strip, 240 second weak part, 2401 second notch, 2402 second fragile part;
25 buffer step, 250 upper step surface, 251 lower step surface, 252 slope; and
26 Processing positioning hole.

### DETAILED DESCRIPTION

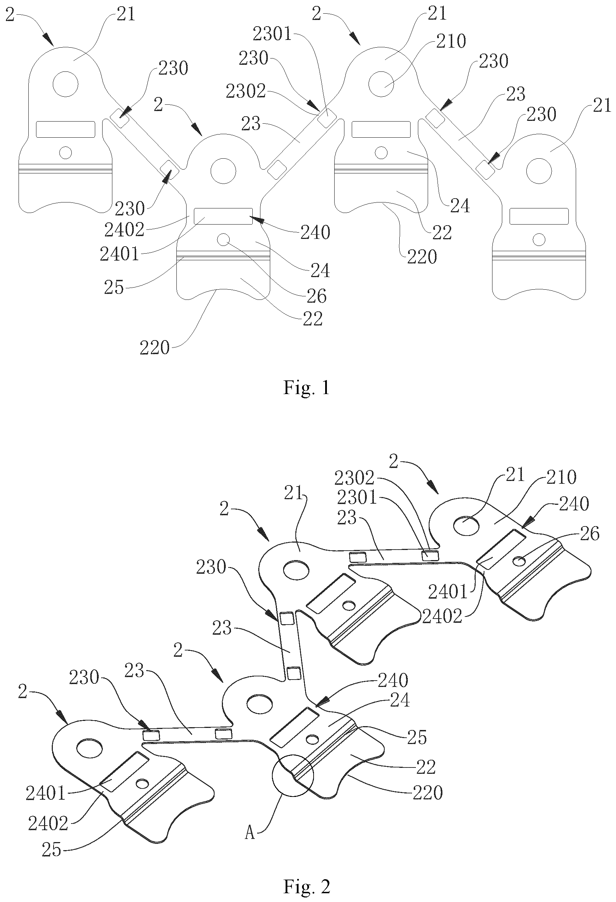

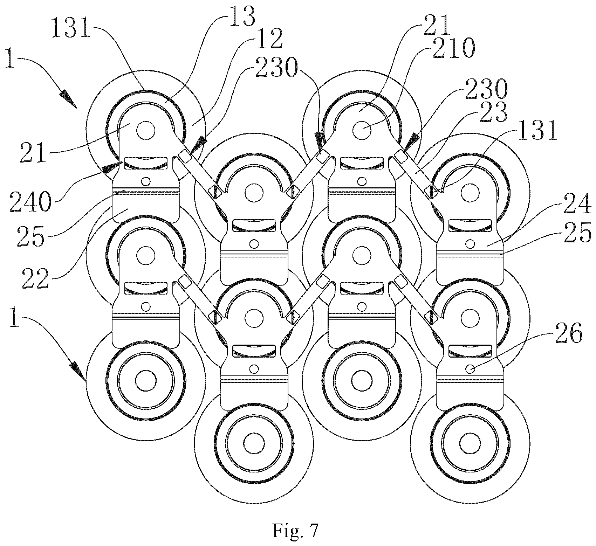

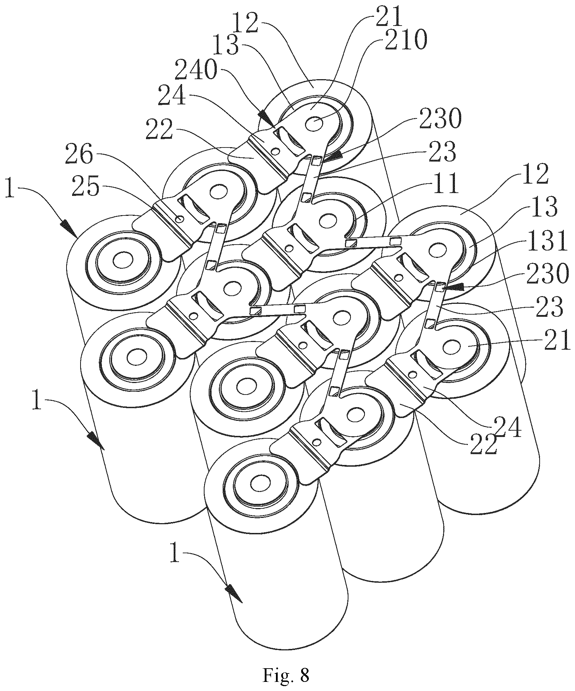

Referring to Figs. 1 and 2, disclosed in the present disclosure is a bus bar, configured to connect a plurality of cells 1 in series and/or in parallel, thereby enabling the plurality of cells 1 to be connected in series and/or in parallel as a battery module, which is shown in Figs. 7 and 8. The bus bar can transmit all the power generated by the cells 1 to the output port of the battery module for use by external devices.

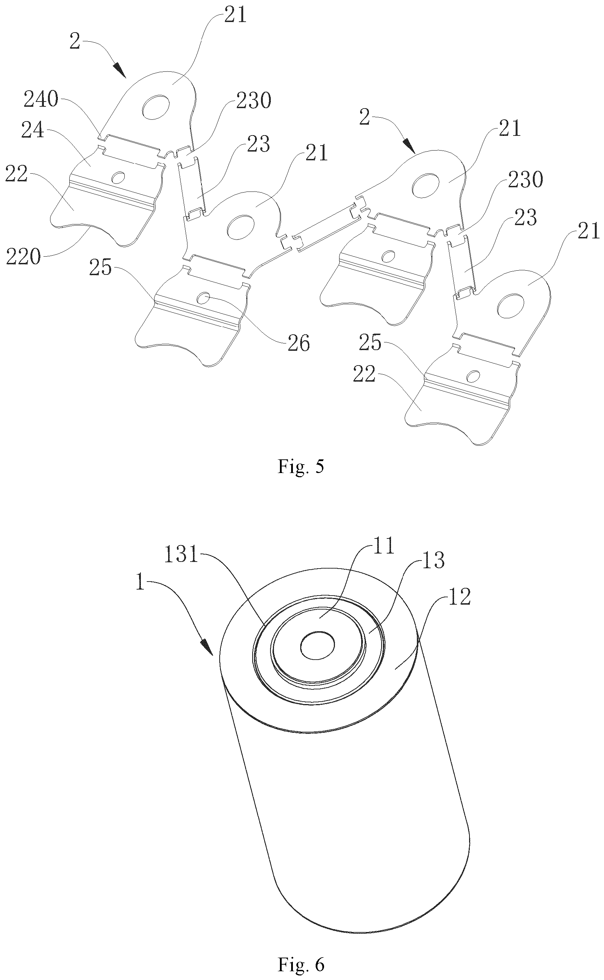

In an embodiment, as shown in Fig. 6, each of the cells 1 is a cylindrical power cell, and each of the cells 1 is provided with a positive electrode 11, a negative electrode 12, and a pressure relief valve 13. The positive electrode 11, the negative electrode 12, and the pressure relief valve 13 on each of the cells 1 are all located on a same end surface of the cell 1, so as to facilitate the bus bar to connect the plurality of cells 1 in series and in parallel. Specifically, the positive electrode 11 of the cell 1 is a positive pole post, the pressure relief valve 13 is arranged around a periphery of the positive electrode 11, the negative electrode 12 is arranged around a periphery of the pressure relief valve 13. The positive electrode 11, the negative electrode 12, and the pressure relief valve 13 of the cell 1 are all arranged coaxially. Since the positive electrode 11 of each of the cells 1 is the positive pole post, an upper surface of the positive pole post is higher than the negative electrode 12 of each of the cells 1 and an upper surface of the pressure relief valve 13. Such height difference facilitates the bus bar to connect the positive pole post and the negative electrode 12, respectively, and does not likely to cause the positive and negative electrode connection in the cell 1 to be short-circuited. In some implementations, each of the cells 1 may also be a prismatic cell, a rectangular cell, or cells of other shapes, in which a shape of the cell 1 is not limited. When the cell 1 is a prismatic cell or a rectangular cell, the pressure relief valve 13 may be provided on the positive electrode 11 without being limited by a position of the negative electrode 12. In some implementations, the pressure relief valve 13 may be a pressure relief device such as a safety valve, a pressure relief valve, or an explosion-proof valve.

As shown in Fig. 6, the positive electrode 11 and the pressure relief valve 13 of the cell 1 are designed to be provided together. The positive electrode 11 and the pressure relief valve 13 of the cell 1 can be an integrated structure or an integrally formed structure. When the pressure relief valve 13 is opened, the pressure relief valve 13 falls off from the cell 1, and the positive electrode 11 falls off as the pressure relief valve 13 falls off. When the internal pressure of the cell 1 reaches a preset maximum pressure at which a pressure relief valve 13 is opened, in order to enable the pressure relief valve 13 to be opened smoothly, the pressure relief valve 13 is provided with a thinning area 131 configured to be burst during pressure relief, and the thinning area 131 is provided in an annular shape, and the thinning area 131 is provided close to the negative electrode 12, so as to maximize an opening area of the pressure relief valve 13, facilitate rapid pressure relief, and improve safety performance. The thinning area 131 is a pressure relief indentation of the pressure relief valve 13. The pressure relief indentation is a preset weak area, and the pressure relief indentation is broken when a preset pressure is reached or exceeded. The pressure relief indentation may be a groove, a cut, a weakening line or other form of structure. A depth, width and shape of the pressure relief indentation may be set according to an actual situation, as long as it ensures that the pressure relief indentation is broken at the preset pressure. In some implementations, when the pressure relief valve 13 is opened, the positive electrode 11 may not fall off from the cell 1. In such case, an additional ring is necessary for the thinning area 131 of the pressure relief valve 13, and the additional thinning area 131 needs to be close to the positive electrode 11, so that both thinning areas 131 of the pressure relief valve 13 are broken when the pressure relief valve 13 is opened.

The pressure relief valve 13 of the cell 1 is designed directly with the positive electrode 11 of the cell 1. On the one hand, it ensures that the pressure relief valve 13 can respond quickly and accurately when the internal pressure of the cell 1 is abnormally increased. This real-time response ability facilitates to release the gas accumulated in the cell 1 in time, preventing the cell 1 from being dangerous due to excessive pressure; on the other hand, since the positive electrode 11 is one of the main areas of heat generation inside the cell 1, the design of the pressure relief valve 13 being provided at the positive electrode 11 of the cell 1 can utilize the heat dissipation performance of the pressure relief valve 13 more effectively to assist in reducing the temperature of the battery and improve the thermal stability of the battery; thirdly, the integration of the pressure relief valve 13 with the positive electrode 11 of the cell 1 can save the space inside the cell 1, so that a structure of the battery is more compact, which is conducive to an increase in the energy density and power density of the battery while reducing production costs. Fourthly, by designing the pressure relief valve 13 with the positive electrode 11 of the cell 1, the manufacturing process of the battery may be simplified, and the production difficulty thereof may be reduced. Therefore, the pressure relief valve 13 of the cell 1 is designed directly with the positive electrode 11 of the cell 1, which not only improves the safety performance and stability of the battery, but also achieves the purpose of compacting the battery structure and simplifying the manufacturing process.

Referring to Figs. 1 and 2, the bus bar in the present disclosure includes at least two conductive sheets 2, each of conductive sheets 2 includes a positive electrode welding part 21 and a negative electrode welding part 22, a first weak part 230 is provided at a joint of the positive electrode welding parts 21 of two adjacent conductive sheets 2, and a second weak part 240 is provided at a joint of the positive electrode welding part 21 and the negative electrode welding part 22 of each of the conductive sheets 2. As shown in Fig. 7 and Fig. 8, among each of the conductive sheets 2, the positive electrode welding part 21 is connected to the positive electrode 11 of one of the cells 1, and the negative electrode welding part 22 is connected to the negative electrode 12 of another adjacent cell 1, thereby realizing a series connection of the two adjacent cells 1; the positive electrode welding parts 21 of the two adjacent conductive sheets 2 are connected to the positive electrode 11 of the two adjacent cells 1, respectively, thereby realizing a parallel connection of the two adjacent cells 1. That is, each of the conductive sheets 2 achieves the series connection of two adjacent cells 1 and forms a cell unit. The adjacent two cell units are connected in parallel through the positive electrode welding parts 21 of the adjacent two conductive sheets 2. The adjacent two cell units are staggered in position to allow the arrangement of the cells 1 to be more compact, so that more cells 1 can be arranged within a unit volume, thereby forming a battery module or battery pack with a small volume and a large capacity. Specifically, the connection between the positive electrode welding part 21 and the positive electrode 11, and the connection between the negative electrode welding part 22 and the negative electrode 12 may be made by laser welding, or by crimping or screwing.

Since the positive electrode 11 of the cell 1 and the pressure relief valve 13 are designed to be together, the bus bar hinders the opening of the pressure relief valve 13 when the bus bar is welded together with the positive electrode 11 of the cell 1. The existing design provides an avoidance notch for the bus bar to avoid the position of the pressure relief valve, but the area left for the pressure relief valve on the cell end surface is very limited, resulting in a relatively small opening of the pressure relief valve, the pressure relief being not fast enough. The setting of the avoidance notch also reduces the connection area between the bus bar and the positive electrode, thereby leading to a reduction in the connection strength. To this end, when the positive electrode 11 of the cell 1 and the pressure relief valve 13 are designed to be together, the pressure relief valve 13 can break the first weak part 230 and the second weak part 240 when pressure is relieved through the pressure relief valve 13 by facing the first weak part 230 and the second weak part 240 directly facing the thinning area 131, referring to Figs. 7 and 8, so as to ensure that the pressure relief valve 13 can efficiently relieve pressure without being hindered by the bus bar.

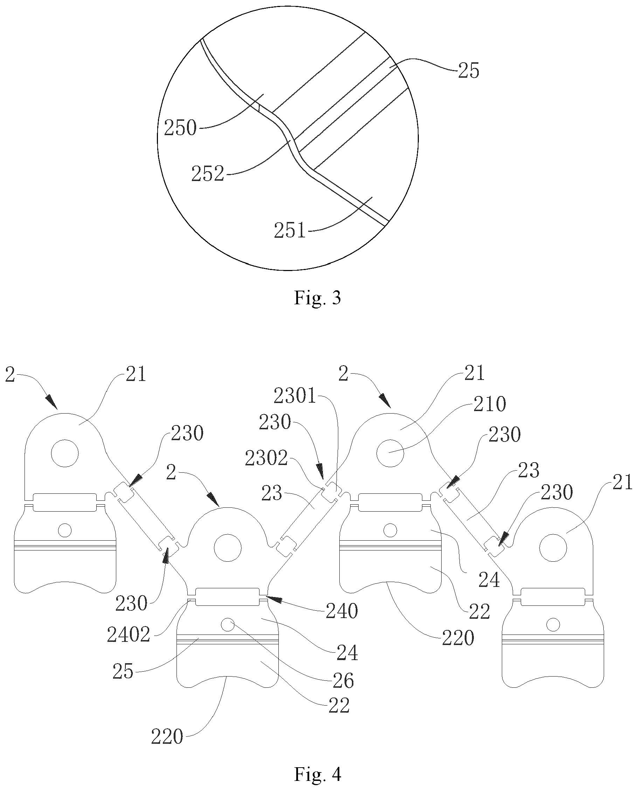

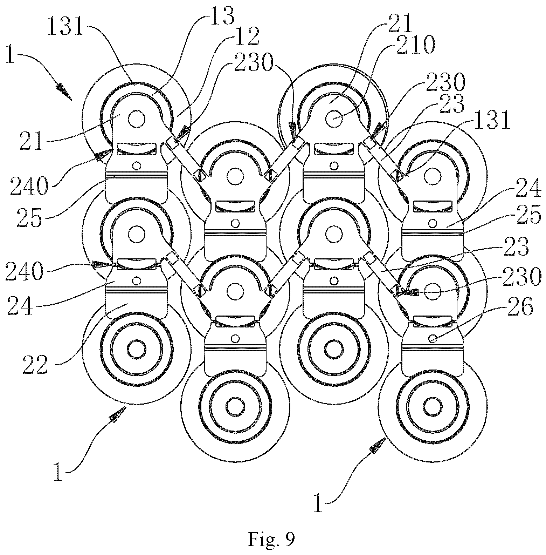

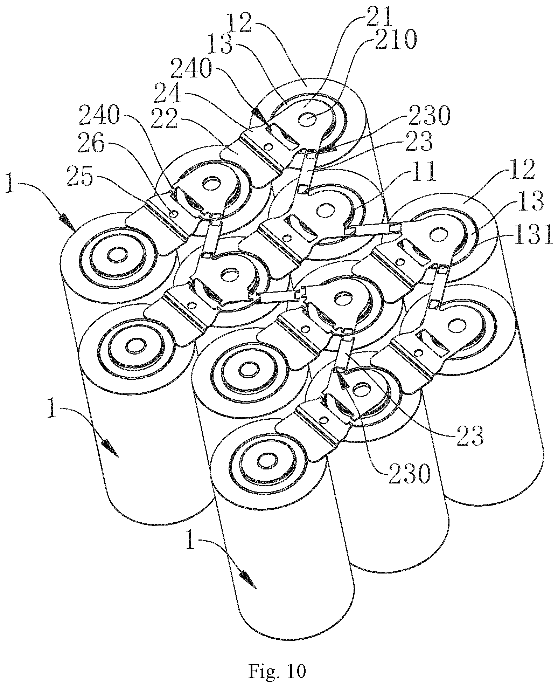

In some implementations, by setting the first weak part 230 and the second weak part 240 of the bus bar directly facing the thinning area 131, the thinning area 131 is opened by the high-pressure gas in the cells 1 first when pressure is relieved through the pressure relief valve 13, and the impact force of the rapid opening of the pressure relief valve 13 breaks the first weak part 230 and the second weak part 240 (see Figs. 4, 5, 9, and 10), so that the pressure relief valve 13 can efficiently relieve pressure without being hindered by the bus bar. In addition, as shown in Figs. 9 and 10, while the first weak part 230 and the second weak part 240 are broken, the circuit connection loop between the two adjacent cells 1 is also disconnected, so that even if a short-circuit occurs in the cell 1, the short-circuit protection can be carried out in timely. Finally, it synchronously achieves the double protection of internal pressure relief protection and cell short-circuit protection when the cells 1 are abnormal, which provides an enhanced guarantee for the thermal safety and electrical safety operation of the battery. In addition, the first weak part 230 and the second weak part 240 may also be fused by overcurrent when subjected to strong current, which can also achieve the purpose of double protection, i.e., achieve the internal pressure relief protection and the cell short-circuit protection between the cells 1 when the cells 1 are abnormal.

For the first weak part 230 and the second weak part 240 may be fused by overcurrent when subjected to strong current, there are two fusing conditions. The first fusing condition is that, since the first weak part 230 achieves two cells 1 connected in parallel, when a short-circuit or thermal runaway occurs inside the cells 1, or when a short-circuit or collision occurs outside the cells 1, the first weak part 230 is fused to prevent the short-circuit from spreading to cells 1 connected in parallel to prevent thermal runaway from spreading to the adjacent cells 1; the second fusing condition is that, since the second weak part 240 achieves two cells 1 connected in series, when a short-circuit or collision outside the battery module consisting by cells 1 leads to a short-circuit inside the battery module, the second weak part 240 is fused to prevent the short-circuit from spreading to the cells 1 connected in series to prevent thermal runaway from spreading to the adjacent cells 1.

When an abnormality occurs in the battery, such as being subjected to an external collision, the general short-circuit and the internal thermal runaway of the battery may occur synchronously. Therefore, the double protection of the internal pressure relief protection and the cell short-circuit protection achieved synchronously in the present disclosure can effectively enhance the safe operation of the battery. In addition, the first weak part 230 and the second weak part 240 are adopted in the present disclosure to be broken by the opened pressure relief valve 13 to achieve short-circuit protection of the circuit, which is faster and less time-consuming than fusing, and therefore safer.

In some implementations, as shown in Figs. 9 and 10, since the positive electrode 11 and the pressure relief valve 13 of the cell 1 are of an integral structure, the pressure relief valve 13 is arranged around a periphery of the positive electrode 11, and the thinning area 131 of the pressure relief valve 13 is close to the negative electrode 12. After the pressure relief valve 13 is opened, the first weak part 230 and the second weak part 240 are broken, which causes the pressure relief valve 13 and the positive electrode 11 to fall off from the cell 1 collectively, which may further increase the opening of the pressure relief valve 13 and realize the rapid and timely pressure relief of the cell 1.

In some implementations, if the pressure relief valve 13 is not normally opened or does not need to be opened or the pressure is small after the pressure relief valve 13 is opened, that is, the first weak part 230 and the second weak part 240 are not broken, when the battery is short-circuited, the first weak part 230 and the second weak part 240 can also be fused by the overloaded large current, thus providing short-circuit protection between the cells 1 and preventing the spread of thermal runaway.

In some implementations, as shown in Figs. 1 and 2, provided are two first weak parts 230, the two first weak parts 230 are close to the positive electrode welding parts 21 of the two adjacent conductive sheets 2 respectively, and the two first weak parts 230 are directly facing the thinning areas 131 of the two adjacent pressure relief valves 13 respectively. Two first weak parts 230 are adopted in the present disclosure, and the two first weak parts 230 are directly facing the thinning areas 131 of the two adjacent pressure relief valves 13. When any one of the pressure relief valves 13 is opened, it can independently break the connection between the two adjacent conductive sheets 2 to ensure that the pressure relief valve 13 on each cell 1 can be opened smoothly to achieve efficient pressure relief, which can also achieve short-circuit protection on any cell 1; the setting of the two first weak parts 230 can break the first weak part 230 and the second weak part 240 on the corresponding conductive sheet 2 when any one of the pressure relief valve 13 adjacent thereto is opened, so that it can independently break the connection between the two adjacent conductive sheets 2, so as to allow each of the conductive sheets 2 to fall off together with the corresponding pressure relief valve 13 and positive electrode 11 both falling off from an end of the cell 1. In some implementations, provided may be only one first weak part 230, as long as the first weak part 230 corresponding to the thinning area 131 of the pressure relief valve 13 is easily broken by the pressure relief valve 13 that is opened, but the first weak part 230 being set to one may cause the connection strength of the positive electrode welding parts 21 of the two adjacent conductive sheets 2 to be weakened, and the first weak part 230 may be severely deformed or even broken when the battery is subjected to external impact.

In some implementations, in order to enhance the connection strength of the positive electrode welding parts 21 of the two adjacent conductive sheets 2, the positive electrode welding parts 21 of the two adjacent conductive sheets 2 are connected by a first connecting strip 23, and the two first weak parts 230 are located on the first connecting strip 23 and are provided at two ends of the first connecting strip 23 respectively. The first connecting strip 23 can not only ensure the connection strength between the two adjacent conductive sheets 2, facilitate the transportation and installation of the bus bar, but also withstand the external impact force to avoid the fracture of the first weak part 230. In addition, the first connecting strip 23 can also bear a large current to reduce electrical losses.

In some implementations, referring to Figs. 1 and 2, the first weak part 230 is a first connecting sheet provided with a first notch 2301, and the first connecting sheet is located at two ends of the first connecting strip 23. In some implementations, the first notch 2301 is located in a middle of the first connecting sheet, in which the first notch 2301 is a through hole. The first connecting sheet forms first fragile parts 2302 on two sides of the first notch 2301, and a sum of cross-sectional areas of the two first fragile parts 2302 is not greater than a cross-sectional area of the first notch 2301.

The first notch 2301 of the present disclosure is arranged to reduce the cross-section area of the first connecting sheet so that the first weak part 230 can be broken easily and quickly when the pressure relief valve 13 is opened. When the first notch 2301 is located in the middle of the first connecting sheet, the first notch 2301 is a through hole, the first connecting sheet forms a first fragile part 2302 on two sides of the first notch 2301, and the cross-section area of the first fragile part 2302 is much smaller than a cross-sectional area of the first notch 2301. In the case of ensuring that the first fragile part 2302 can withstand the rated current when charging and discharging the cell 1, the width and the thickness of the first fragile part 2302 may be designed to be as small as possible, so that the first weak part 230 is more likely to be broken by the pressure relief valve 13 that is opened.

In some implementations, in order to ensure that the first fragile part 2302 can withstand the rated current when charging and discharging the cell 1, and that the first weak part 230 is more likely to be broken by the impact force of the pressure relief valve 13 that is opened, it is also necessary to ensure the connection strength of the first weak part 230 is enough during installation and transportation. To this end, in the present disclosure, a width of the first fragile part is set to A, a width of the first connecting sheet is set to B, and a ratio of A/B is in a range of 0.12 to 0.15. In some implementations, the ratio may be 0.13 and 0.14. When the ratio of A/B is less than 0.12, the first weak part 230 may be fused due to its inability to withstand the rated current during battery charging and discharging, and may not meet the connection strength requirements, leading to easy deformation or breakage during installation and transportation. When the ratio of A/B is greater than 0.15, although the first weak part 230 meets the requirements to withstand the rated current during battery charging and discharging and the connection strength, it causes the first weak part 230 to be less likely to be broken by the impact force of the pressure relief valve 13 that is opened, or to be less likely to be fused in the event of an overcurrent, which leads to invalid double protection of the first weak part 230. For this reason, it is necessary to set the ratio of A/B to be within a range of 0.12 to 0.15.

In some implementations, the width of the first fragile part 2302 is 0.7 mm, and the tolerance is plus or minus 0.05 mm, that is, the width of the first fragile part 2302 is in a range of 0.65 mm to 0.75 mm. Correspondingly, the width of the first connecting sheet is 5 mm, and the tolerance is plus or minus 0.05 mm, that is, the width of the first connecting sheet is in a range of 4.95 mm to 5.05 mm.

In some implementations, referring to Figs. 1 and 2, in a single conductive sheet, the positive electrode welding part 21 and the negative electrode welding part 22 are connected by a second connecting strip 24, the second weak part 240 is provided on the second connecting strip 24, and the second weak part 240 is close to the positive electrode welding part 21. A second connecting strip 24 is also provided in the present disclosure, which enhances the connection strength of the positive electrode welding part 21 and the negative electrode welding part 22 in each of the conductive sheets 2. When the cell 1 is subjected to its own expansion force or external force, the second connecting strip 24 can be deformed accordingly, while avoiding the second weak part 240 from being broken. The second connecting strip 24 mainly achieves the series connection of two adjacent cells 1, and the current to be carried is relatively large, so the width of the second connecting strip 24 is relatively wide and the cross-section area is relatively large. The first connecting strip 23 mainly achieves the parallel connection of two adjacent cells 1, and the current to be carried is relatively small, so the width of the first connecting strip 23 is relatively narrow and the cross-section area is relatively small. To this end, a width of the second connecting strip 24 is set to be greater than a width of the first connecting strip 23.

In some implementations, the second weak part 240 is a second connecting sheet provided with a second notch 2401, and the second notch 2401 is also intended to reduce a cross-sectional area of the second connecting sheet. The second notch 2401 is located in a middle of the second connecting sheet, the second connecting sheet forms second fragile parts 2402 on two sides of the second notch 2401, and a cross-sectional area of each of the second fragile parts 2402 is smaller than a cross-sectional area of the second notch 2401.

The second notch 2401 of the present disclosure is arranged to reduce the cross-section area of the second connecting sheet, so that the second weak part 240 can be broken easily and quickly when the pressure relief valve 13 is opened. When the second notch 2401 is located in the middle of the second connecting sheet, the second notch 2401 is a through hole, the second connecting sheet forms a second fragile part 2402 on two sides of the second notch 2401, and the cross-section area of the second fragile part 2402 is much smaller than a cross-sectional area of the second notch 2401, so that the second weak part 240 is more likely to be broken by the pressure relief valve 13 that is opened. In the case of ensuring that the second fragile part 2402 can withstand the rated current when charging and discharging the cell 1, the width and the thickness of the second fragile part 2402 may be designed to be as small as possible, so that the second weak part 240 is more likely to be broken by the pressure relief valve 13 that is opened.

In some implementations, in order to ensure that the second fragile part 2402 can withstand the rated current when charging and discharging the cell 1, and that the second weak part 240 is more likely to be broken by the impact force of the pressure relief valve 13 that is opened, it is also necessary to ensure the connection strength of the second weak part 240 is enough during installation and transportation. To this end, in the present disclosure, a width of the second fragile part 2402 is set to C, a width of the second connecting sheet is set to D, and a ratio of C/D is set to a range of 0.073 to 0.077. In some implementations, the ratio may be 0.074, 0.075, and 0.076. When the ratio of C/D is less than 0.073, the second weak part 240 may be fused due to its inability to withstand the rated current during battery charging and discharging, and may not meet the connection strength requirements, leading to easy deformation or breakage during installation and transportation. When the ratio of C/D is greater than 0.077, although the second weak part 240 meets the requirements to withstand the rated current during battery charging and discharging and the connection strength, it causes the second weak part 240 to be less likely to be broken by the impact force of the pressure relief valve 13 that is opened, or to be less likely to be fused in the event of an overcurrent, which leads to invalid double protection of the second weak part 240. For this reason, it is necessary to set the ratio of C/D to be within a range of 0.073 to 0.077.

In some implementations, the width of the second fragile part 2402 is 2.1 mm, and the tolerance is plus or minus 0.05 mm, that is, the width of the second fragile part 2402 is in a range of 2.05 mm to 2.15 mm. Correspondingly, the width of the second connecting sheet is 28 mm, and the tolerance is plus or minus 0.05 mm, that is, the width of the second connecting sheet is in a range of 27.95 mm to 28.05 mm.

When a plurality of cells 1 are connected in series and in parallel in the bus bar to form a battery module, it is necessary to pour foaming glue between adjacent cells 1 for foaming, so that all cells 1 are bonded together by foaming glue, the second notch 2401 can be used as a glue leak hole, the adjacent cells 1 are bonded together by foaming glue injected from the glue leak hole, and the excess glue can also overflow from the glue leak hole to ensure the uniformity of the filled glue between the adjacent cells 1. In some implementations, the foaming glue may also be other bonding adhesive.

In some implementations, referring to Figs. 2 and 3, the second connecting strip 24 is provided with a buffer step 25, the positive electrode welding part 21 and the second weak part 240 are both located on an upper step surface 250 of the buffer step 25, the negative electrode welding part 22 is located on a lower step surface 251 of the buffer step 25, and in a vertical direction, the upper step surface 250 is located above the lower step surface 251. In the cell 1 with the positive and negative electrodes on the same end surface, there is a certain height difference between the upper surface of the positive electrode 11 and the upper surface of the negative electrode 12. This height difference facilitates the bus bar to connect the positive pole post and the negative electrode 12 respectively, and does not easily cause a short circuit in the cell 1. In some implementations, the upper surface of the positive electrode 11 is higher than the upper surface of the negative electrode 12, so the upper step surface 250 is located above the lower step surface 251. In addition, the upper surface of the positive electrode 11 of the cell 1 is also higher than the upper surface of the pressure relief valve 13 of the cell 1, so that there is a gap between the bottom surface of the second weak part 240 and the upper surface of the corresponding pressure relief valve 13. When it is necessary to pour foaming glue between adjacent cells 1 for foaming, the second notch 2401 acts as a glue leak hole. After the foaming glue is injected from the second notch 2401, foaming glue can flows smoothly into the gap between the bottom surface of the second weak part 240 and the upper surface of the corresponding pressure relief valve 13.

A buffer step 25 is provided in the present disclosure, firstly, the buffer step 25 can match the height difference between the positive electrode 11 and the negative electrode 12, so that the positive electrode welding part 21 can be fitted to the upper surface of the positive electrode 11, and the negative electrode welding part 22 can be fitted to the upper surface of the negative electrode 12, so as to facilitate the welding and fixation of the bus bar and the positive and negative electrodes; secondly, the buffer step 25 can provide a buffer for a slight relative movement between the two adjacent cells 1, so as to avoid pulling or breaking the second weak part 240.

In some implementations, the upper step surface 250 and the lower step surface 251 are connected by a slope 252, and the joints between the upper step surface 250, the lower step surface 251, and the slope 252 are all in an arc shape. Both the arc shape and the slope 252 provide a greater amount of buffer deformation for the buffer step 25, which allows it to be able to withstand a greater impact force or relative displacement. A height difference between the upper step surface 250 and the lower step surface 251 is in a range of 1 to 2 mm. In some implementations, the height difference is 1.5 mm.

In some implementations, the second connecting strip 24 is provided with a processing positioning hole 26 between the buffer step 25 and the second weak part 240. The processing positioning hole 26 provides positioning of the bus bar during processing to achieve precise processing of the bus bar.

In some implementations, referring to Fig. 6, since the positive electrode 11, the negative electrode 12 and the pressure relief valve 13 of the cell 1 are all coaxially arranged, and the positive electrode 11 is provided in the middle, the exterior of the positive electrode 11 is surrounded by the pressure relief valve 13 and the negative electrode 12 sequentially. That is, the positive electrode 11 is the pole post, and the pressure relief valve 13 and the negative electrode 12 are rings surrounding the pole post. Referring to Figs. 1 and 2, in order to fit with the annular surface of the negative electrode 12 and to avoid interference with the pressure relief valve 13, the negative electrode welding part 22 is provided with a concave arc-shaped surface that cooperates with the annular surface; in order to fit with the circular pole post of the positive electrode 11, the positive electrode welding part 21 is a circular surface that cooperates with the circular pole post.

The negative electrode welding part 22 of the present disclosure is provided with a concave arc-shaped surface 220. On the one hand, the concave arc-shaped surface 220 leads to an increase in the welding area with the negative electrode 12 and an enhancement in the connection strength; on the other hand, the concave arc-shaped surface 220 avoids interference with the pressure relief valve 13 and prevent the negative electrode welding part 22 from covering the thinning area 131 of the pressure relief valve 13 causing the pressure relief valve 13 to be not opened normally. The circular surface of the positive electrode welding part 21 cooperates with the circular pole post of the positive electrode 11 to increase the connection area and strengthen the connection strength.

In some implementations, referring to Figs. 1 and 2, the positive electrode welding part 21 is provided with a positioning through hole 210 configured to be in welding connection with the positive electrode 11 of the cell 1. When a robot performs laser welding, the positive electrode 11 can be locked through the positioning through hole 210, so that the positive electrode welding part 21 can be accurately welded to the positive electrode 11. The positive electrode 11 opposite to the positioning through hole 210 is provided with a groove for receiving welding liquid, so that the connection between the positive electrode 11 and the positive electrode welding part 21 is more secure.

The positioning through hole 210 of the present technical solution is conducive to finding the positive electrode 11 when laser welding the positive electrode welding part 21 and the positive electrode 11, thereby achieving the accuracy of the welding.

Provided in the present disclosure is also a battery module, referring to Figs. 7 to 10, including a plurality of cells 1 and a bus bar mentioned above. The bus bar connects the plurality of cells 1 in series and/or in parallel through a plurality of conductive sheets 2, thereby forming a battery module.

Regarding the battery module provided in the present disclosure, by setting the first weak part 230 and the second weak part 240 of the bus bar to be above the thinning area correspondingly the pressure relief valve 13 can break the first weak part 230 and the second weak part 240 when pressure is relieved, so that the pressure relief valve 13 can efficiently relieve pressure and the pressure relief valve 13 can also disconnect the circuit connection loop between two adjacent cells 1. Therefore, even if a short-circuit occurs between cells 1 or inside and outside the battery module, the short-circuit protection can be carried out in time, and finally a double protection of the internal pressure relief protection of the battery module and the cell short-circuit protection of the battery module can be achieved synchronously to improve the thermal safety and electrical safety operation performance of the battery module. In addition, the first weak part 230 and the second weak part 240 may also be fused by overcurrent when subjected to strong current, which can also achieve the double protection of pressure relief protection and short-circuit protection.

In some implementations, referring to Figs. 7 and 8, the positive electrode welding parts 21 of the two adjacent conductive sheets 2 are connected to the positive electrodes 11 of the two adjacent cells 1 respectively so that the two adjacent cells 1 are connected in parallel; the positive electrode welding parts 21 and the negative electrode welding parts 22 of each of conductive sheets 2 are correspondingly connected to the positive electrode 11 and the negative electrode 12 of the two adjacent cells 1 respectively so that the two adjacent cells 1 are connected in series. That is, each of the conductive sheets 2 is connected in series with two adjacent cells 1 to form a cell unit, and the adjacent two cell units are connected through a positive electrode welding part 21 of the adjacent two conductive sheets 2 to achieve parallel connection of the adjacent two cell units. The two adjacent cells are staggered in position to allow the arrangement of the cells 1 to be more compact, so that the battery module is as small as possible in volume while having maximum capacity.

When the battery module is assembled, foaming glue needs to be poured between the adjacent cells 1 for foaming, so that all the cells 1 are bonded together by the foaming glue, the second notch 2401 can be used as the glue leak hole, the adjacent cells 1 are bonded together by the foaming glue injected from the glue leak hole, and the excess glue can also overflow from the glue leak hole to ensure the uniformity of the filled glue between the adjacent cells 1. In some implementations, the foaming glue may also be other bonding adhesive.

Disclosed in the present disclosure is further a battery pack, including the battery module mentioned above.

By setting the first weak part 230 and the second weak part 240 of the bus bar directly facing the thinning area 131, the thinning area 131 is first opened by the high-pressure gas in the cell 1 when pressure is relieved by the pressure relief valve 13. At the same time, the strong impact force of the rapid opening of the pressure relief valve 13 breaks the first weak part 230 and the second weak part 240. It ensures that the pressure relief valve 13 can effectively relieve pressure, and can also disconnect the circuit connection loop between two adjacent cells 1, so that even if a short-circuit occurs between the cells 1 or in the battery module or the battery pack, the short-circuit protection can be carried out in time, and finally a double protection of the internal pressure relief protection of the battery pack and the short-circuit protection of the battery pack can be achieved synchronously to improve the thermal safety and electrical safety operation performance of the battery pack. In addition, the first weak part 230 and the second weak part 240 may also be fused by overcurrent, which can also achieve the double protection of pressure relief protection and short-circuit protection.

The battery pack in the present disclosure may be applied to a variety of fields, which may be such as installed in electric vehicles, electric bicycles, electric motorcycles and other electric equipment, may also be installed in mobile devices such as smart phones, may also be installed in drones, airplane models, as well as energy storage systems such as grid energy storage, solar energy storage, and may also be applied to even industrial robots and medical equipment.

## Claims

1. A bus bar, configured to connect a plurality of cells (1) in series and/or in parallel, comprising at least two conductive sheets (2), each conductive sheet (2) comprising a positive electrode welding part (21) and a negative electrode welding part (22);
wherein a first weak part (230) is provided at a joint of the positive electrode welding parts (21) of two adjacent conductive sheets (2), and a second weak part (240) is provided at a joint of the positive electrode welding part (21) and the negative electrode welding (22) part of each of the conductive sheets (2);
among each of the conductive sheets (2), the positive electrode welding part (21) is connected to a positive electrode (11) of the cell (1), and negative electrode welding part (22) is connected to a negative electrode (12) of an adjacent cell (1); and
among each of the cells (1), a pressure relief valve (13) is provided at the positive electrode (11) thereof, the positive electrode (11) and the pressure relief valve (13) are of a one-piece structure, the pressure relief valve (13) is provided with a thinning area (131) configured to be burst when pressure is released, the first weak part (230) and the second weak part (240) are respectively located above the thinning area (131), so that at least one of the following is met: (a) the first weak part (230) and the second weak part (240) are broken by a strong impact force when the thinning area (131) is burst, and (b) the first weak part (230) and the second weak part (240) are fused by overcurrent when subjected to a strong current.

2. The bus bar according to claim 1, wherein the positive electrode welding part (21) and the negative electrode welding part (22) of each of the conductive sheets (2) are correspondingly connected with the positive electrode (11) and the negative electrode (12) of two adjacent cells (1), so that the two adjacent cells (1) are connected in series and form a cell unit, the two adjacent cell units are connected in parallel through the positive electrode welding parts (21) of the two conductive sheets (2) thereon, a first connecting strip (23) is provided at a joint of the positive electrode welding parts (21) of the two conductive sheets (2) on the two adjacent cell units, and the first weak part (230) is provided on the first connecting strip (23).

3. The bus bar according to claim 2, wherein provided are two first weak parts (230), the two first weak parts (230) are respectively provided at two ends of the first connecting strip (23) and close to the corresponding positive electrode welding part (21), and the two first weak parts (230) are directly facing the thinning areas (131) of the two adjacent pressure relief valves (13), respectively.

4. The bus bar according to any one of claims 1-3, wherein the first weak part (230) is a connecting sheet provided with a first notch (2301), and the first notch (2301) is located in a middle of the connecting sheet.

5. The bus bar according to claim 4, wherein the connecting sheet forms fragile parts on two sides of the first notch (2301), a sum of cross-sectional areas of the two fragile parts is not greater than a cross-sectional area of the first notch (2301), and a width of the fragile part is A, a width of the connecting sheet is B, and a ratio of A/B is in a range of 0.12 to 0.15.

6. The bus bar according to claim 1, wherein in a single conductive sheet, the positive electrode welding part (21) and the negative electrode welding part (22) are connected by a second connecting strip (24), the second weak part (240) is provided on the second connecting strip (24), and the second weak part (240) is close to the positive electrode welding part (21).

7. The bus bar according to claim 1 or 6, wherein the second weak part (240) is a connecting sheet with a second notch (2401).

8. The bus bar according to claim 7, wherein the second notch (2401) is located in a middle of the connecting sheet, the connecting sheet forms fragile parts on two sides of the second notch (2401), a cross-sectional area of each of the fragile parts is smaller than a cross-sectional area of the second notch (2401), and a width of the fragile part is C, a width of the connecting sheet is D, and a ratio of C/D is in a range of 0.073 to 0.077.

9. The bus bar according to claim 6, wherein the second connecting strip (24) is provided with a buffer step (25), the positive electrode welding part (21) and the second weak part (240) are both located on an upper step surface (250) of the buffer step (25), the negative electrode welding part (22) is located on a lower step surface (251) of the buffer step (25), the upper step surface (250) is connected with the lower step surface (251) through a slope (252), and a height difference between the upper step surface (250) and the lower step surface (251) is in a range of 1 to 2 mm.

10. The bus bar according to claim 1 or 6, wherein the negative electrode (12) of the cell (1) is an annular surface, and the negative electrode welding part (22) is provided with a concave arc-shaped surface that cooperates with the annular surface, the positive electrode (11) of the cell (1) is a circular pole post, the positive electrode welding part (21) is a circular surface that cooperates with the circular pole post, and the positive electrode welding part (21) is provided with a positioning through hole (210) configured to be in welding connection with the positive electrode (11) of the cell (1).

11. The bus bar according to claim 1, wherein the pressure relief valve (13) is arranged around a periphery of the positive electrode (11), the positive electrode (11) falls off as the pressure relief valve (13) falls off when pressure is released, the negative electrode (12) of the cell (1) is provided around a periphery of the pressure relief valve (11), and the thinning area (131) is provided close to the negative electrode (12).

12. A battery module, comprising a plurality of cells (11) and the bus bar according to any one of claims 1-11, wherein the bus bar connects the plurality of cells (1) in series and/or in parallel through the conductive sheets (2).

13. The battery module according to claim 12, wherein the positive electrode welding part (21) and the negative electrode welding part (22) of the conductive sheet (2) are correspondingly connected with the positive electrode (11) and the negative electrode (12) of the two adjacent cells (1), respectively, so that the two adjacent cells (1) are connected in series and form a cell unit; and the two adjacent cell units are connected through the positive electrode welding parts (21) of the two adjacent conductive sheets (2) to achieve parallel connection of the two adjacent cell units.

14. The battery module according to claim 12, wherein the second notch (2401) is a glue leak hole, and the two adjacent cells (1) are bonded together by viscous glue injected from the glue leak hole.

15. A battery pack, comprising a battery module according to any one of claims 12-14.
